# EUROPEAN PATENT SPECIFICATION

(11) **EP 4 353 463 B1**
(45) Date of publication and mention of the grant of the patent: **07.05.2025**
(21) Application number: 22306562.4
(22) Date of filing: 14.10.2022
(51) Int. Cl.: B29D 11/00, B29C 71/02, B29L 11/00

(54) **UNIVERSAL BASKET**
UNIVERSALKORB
PANIER UNIVERSEL

(43) Date of publication of application: 17.04.2024
(73) Proprietor: Essilor International, 94220 Charenton-Le-Pont (FR)
(72) Inventor: GRIFFIN, Kieran, 94220 CHARENTON-LE-PONT (FR); BUTLER, Josephine, 94220 CHARENTON-LE-PONT (FR); GENTILS, Hervé, 94220 CHARENTON-LE-PONT (FR)
(74) Representative: Plasseraud IP

(56) References cited:
- WO-A1-2012/080775
- CN-A- 110 406 141
- US-A1- 2005 254 148

## Description

### Technical field

This invention relates to a method of manufacturing high index semi-finished lenses involving the use of a universal basket.

### Background information and prior art

The process of manufacturing ophthalmic lenses usually begins with an unfinished or semi-finished glass or plastic lens blank. Such lenses can be manufactured using a casting process, followed by annealing in an oven at predetermined parameters, such as a predetermined temperature(s) and/or duration. As the manufacturing process proceeds, the blank is edged and shaped into a lens. In typical lens manufacturing processes, high index semi-finished lenses (both progressive addition lenses or PALs and single vision lenses) are casted and then annealed in baskets (also called lens trays or lens racks) having different configurations to accommodate lenses having various diameters, edge thicknesses, and center thicknesses.

Several baskets are known in the art, but have been found to be unsatisfactory for various reasons. Such lens baskets typically have multiple lens holder configurations with numerous receiving points positioned in various places on the lens holder to receive lenses of various dimensions (i.e., various diameters, center thicknesses, and edge thicknesses). The numerous receiving points of these lens holders make it nearly impossible for any manufacturing process involving such baskets to be used in an automated manner using tools such as robotic arms, because there is no geometric consistency between the different lens holder portions of such baskets. The receiving points of the lens holders are not uniform and are unbalanced. Therefore, it is very difficult to effectuate an automated computerized process such that the lenses can be loaded and unloaded from the basket in a consistent, automated manner. Further, such baskets can cause unwanted mechanical stresses to be applied onto the lenses, and may create astigmatism on the lenses themselves, thereby compromising the optical quality and performance of the lenses. This systematic astigmatism can be caused as a semi-finished lens is positioned within the basket such that it is slanted at a non-beneficial angle. Further, the lens holders are not configured to keep the lenses stationary and secured in a single place. Rather, the lenses shift around during the manufacturing process. In addition, some basket configurations are limited to certain uses or products only, thereby limiting the availability of such baskets for other lens products, and potentially creating gaps between lenses if not all of the lens holders can be filled with the same type of lenses, thus causing inefficiencies and increased manufacturing costs.

Accordingly, there is a need for an improved lens basket design that is configured to receive different types of semi-finished lenses having various diameters and edge thicknesses, that can be used in an automated process, such that the optical quality of the lenses is not compromised.

What is presented herein is a unique supporting lens basket that is configured to receive a wide variety of lens geometries and that is capable of being used in automated loading and unloading of the lenses during the manufacturing process. Preferably, the lens used with the apparatus of the disclosed invention is a spectacle lens, more preferably a high index semi-finished lens. However, the apparatus and method described herein can be used with other types of lenses such as finished lenses.

WO 2012/080775 A1 discloses a basket for holding optical article according to the preamble of claim 1 and a method of loading a basket with optical article according to the preamble of claim **11.**

### Summary

What is provided herein is a basket assembly for holding an optical article, the basket comprising: a planar base; and a plurality of lens holders tilted relative to a reference plane that is perpendicular to the planar base, each lens holder comprising: a central arm, first and second angled arms disposed on opposite sides of the central arm, wherein: the first and second angled arms extend from the central arm at a common angle and from a common point of intersection, and the first and second angled arms and the central arm collectively define a tilted plane that is tilted at an angle relative to the reference plane, and first and second support members coupled to, respectively, the first and second angled arms, wherein: the first and second support members are disposed on a side of the tilted plane that faces away from the planar base, and the first and second support members extend away from the first and second angled arms along a direction perpendicular to the tilted plane.

The planar base extends between first and second sides of the basket assembly. The basket assembly comprises at least one longitudinal brace coupled to the planar base and extending between the first and second sides of the basket assembly. The plurality of lens holders comprises a row of lens holders running along a length of the longitudinal brace and spaced equally apart.

The basket assembly comprises a plurality of longitudinal braces that are spaced equally from each other. The plurality of lens holders comprises a row of lens holders for each longitudinal brace, thereby defining a two-dimensional array of lens holders. The row of lens holders is an integral part of the longitudinal brace. Each central arm in the row of lens holders extends from the longitudinal brace to terminate in a free end.

The row of lens holders comprises an adjacent pair of angled arms that, when extending from their respective central arms, merges into each other at a point of union. The longitudinal brace comprises a tab extending into the point of union.

The planar base comprises first and second side walls running along, respectively, the first and second sides of the basket assembly. The longitudinal brace is coupled to the first and second side walls.

First and second angled arms each have a receiving port disposed therethrough, and each support member associated with each angled arm has a portion disposed through the receiving port. The angle of each lens holder relative to the reference plane ranges from 10° to 30°. In particular, the angle is 20° relative to the reference plane.

Also presented herein is a method of loading and unloading a basket assembly configured to hold an optical article, the method comprising: contacting an optical article against a central arm of a lens holder, the lens holder being part of a plurality of lens holders of the basket, the basket comprising: a planar base, and the plurality of lens holders is tilted relative to a reference plane that is perpendicular to the planar base, each lens holder comprising: a central arm, first and second angled arms disposed on opposite sides of the central arm, wherein: the first and second angled arms extend from the central arm at a common angle and from a common point of intersection, and the first and second angled arms and the central arm collectively define a tilted plane that is tilted at an angle relative to the reference plane, and first and second support members coupled to, respectively, the first and second angled arms, wherein: the first and second support members are disposed on a side of the tilted plane that faces away from the planar base, and the first and second support members extend away from the first and second angled arms along a direction perpendicular to the tilted plane; and contacting the optical article against the first and second support members of the lens holder, thereby loading the optical article into the basket assembly. The method further comprises tilting the optical article to be parallel to the tilted plane, thereby orienting the optical article parallel to the tilted plane of the lens holder.

The method further comprises displacing the optical article along a direction parallel to the tilted plane of the lens holder and away from the planar base, thereby unloading the optical article from the basket assembly. The method further comprises wherein the planar base extends between first and second sides; wherein the basket assembly comprises a longitudinal brace coupled to the planar base and extending between the first and second sides; and wherein the plurality of lens holders comprises a row of lens holders running along a length of the at least one longitudinal brace and spaced equally apart.

The basket assembly comprises a plurality of longitudinal braces that are spaced equally from each other; and wherein the plurality of lens holders comprises a row of lens holders for each longitudinal brace, thereby defining a two-dimensional array of lens holders. The row of lens holders is an integral part of the longitudinal brace. Each central arm in the row of lens holders extends from the longitudinal brace to terminate in a free end. The row of lens holders comprises an adjacent pair of angled arms that, when extending from their respective central arms, merges into each other at a point of union; and wherein the longitudinal brace comprises a tab extending into the point of union. The method further comprises wherein the planar base comprises first and second side walls running along, respectively, the first and second sides; and wherein the longitudinal brace is coupled to the first and second side walls. The method further comprises first and second angled arms, each having a receiving port disposed therethrough and each support member associated with each angled arm has a portion disposed through the receiving port.

### Description of the drawings

For a more complete understanding of the description provided herein and the advantages thereof, reference is now made to the brief descriptions below, taken in connection with the accompanying drawings and detailed description, wherein like reference numerals represent like parts.
Figure 1 is a front view of a lens holder that can used herein to hold a lens.
Figure 2 is a front view of a single panel of a plurality of lens holders that are connected (either releasably or permanently) such that they can be used with a basket or tray assembly as one unit.
Figure 3 is a side view of a plurality of lens holders positioned within a tray of the basket assembly, together comprising a lens holder assembly.
Figure 4 is a perspective view of a plurality of lens holders assembled into a tray of the basket assembly to comprise a lens holder assembly.

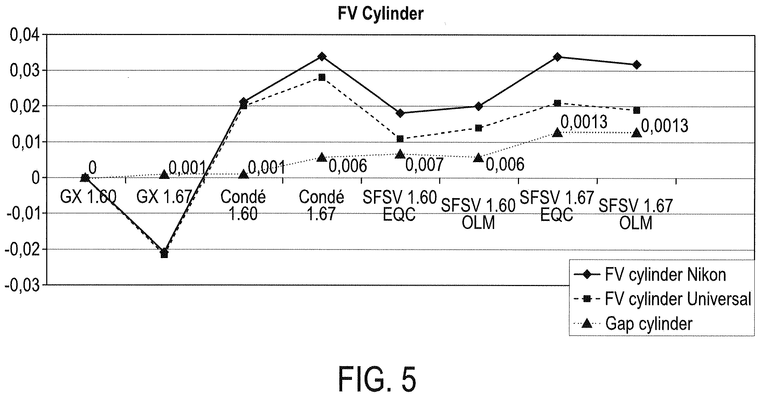

Figure 5 is a graph showing the amount of astigmatism of various lenses as a result of using different lens basket assemblies in the manufacturing process.

### Detailed description of embodiments

In the description which follows, the drawing figures are not necessarily to scale, and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process. To avoid unnecessary details for practicing the invention, the description may omit certain information already known to those skilled in the art.

"High refractive index" means having a refractive index higher than 1.55.

"Lens blanks" are defined herein as a block of material, such as transparent plastic or glass, that is to be machined so as to obtain an optical lens. As used herein, the term "lens" means an optical grade article. The term includes plano lenses as well as powered lenses. Lens blanks can be made of synthetic material. Each lens has a convex surface and a concave surface. The lenses are for use in spectacles (eyeglasses). A lens may be finished (cut or uncut) or unfinished (for example, semi-finished).

"Ophthalmic lens" means intraocular lenses, spectacle lens and the like. "Ophthalmic lenses" may be selected from afocal, single vision, semi-finished, sunglass, plano, unifocal, multi-focal, bifocal, bifocal straight top, trifocal, trifocal straight top, PAL, or a progressive lens. Ophthalmic lenses are manufactured in various powers.

A "Semi-finished lens blank" (or semi-finished blank) means a lens having two surfaces, one of which is finished, generally the front surface, while the other surface, generally the back surface, is unfinished. The semi-finished blank is intended for machining, typically by surfacing and polishing, so as to have both surfaces finished, thus resulting in a finished lens. Methods for obtaining semi-finished blanks are known in the art, and generally may comprise a casting step or a surface machining step.

An optical lens is generally manufactured from an optical lens blank that is provided, such as a semi-finished lens blank. The blank may be obtained, as known in the art, by cutting it out from a plate, by stamping, for example, or by cutting a rod. Further, instead of being simply cut out of a plate, and therefore having parallel planar faces, the starting lens blank may be pre-formed. The lens blank may be made available in standard diameters, for example 76 mm in diameter, and 9 mm in thickness, but certainly other dimensions may be contemplated, as described herein.

Lens blanks typically have a circular peripheral contour. A semi-finished lens blank generally has two opposite surfaces: a first blank convex surface and a second blank concave surface opposed to the convex surface, at least one surface of which is unfinished. The lens blank further comprises a peripheral blank surface linking the first and second blank surfaces. The unfinished surface of the lens blank is machined according to the wearer's prescription to provide the required surface of the optical lens. According to further manufacturing processes, an optical lens may be obtained by .machining both surfaces of an optical lens blank. An optical lens having finished front and back surfaces is often referred to as an uncut optical lens. The lens blank is edged along a line according to a shape of a spectacle frame of the optical lens in order to obtain an edged or cut optical lens. The preferred lens type produced using the invention described herein is a high index semi-finished lens.

For the process described herein, ophthalmic lenses are manufactured using a casting process, followed by an annealing process. Patent application WO 2015/097245, discloses a machine and a method for molding by casting an ophthalmic lens, and in particular, an automated filling of a mold assembly formed by two molding shells and an annular closure member configured to join the shells to define a molding cavity. The shells can be made of a transparent material. The two mold elements may be sealed with a gasket or other sealing mechanism, such as a tape. This sealing mechanism can be used as an annular closure member. The mold cavity is formed by way of the sealing mechanism retaining the two mold elements in separation one from the other. The cavity of the mold is filled with a molding material such as a monomer. The molding cavity is filled by causing the molding material to flow into the molding cavity through a filling aperture provided in the sealing mechanism. This filling aperture is at the periphery of the molding shells so as not to interfere with the optical surface of the ophthalmic lens formed. The molding material is preferably a polymerizable synthetic material, for instance UHI monomer or MR7 or MR8. The filling of the molding cavity can thus be made automatically and in a controlled manner thanks to filling means, acquiring means and control means known in the art. Alternatively, the filling of the molding cavity can be made manually rather than automatically. After filling, the mold is polymerized using a polymerization device, comprising, for instance a lighting and heating source such as a UV source. To do this, the mold is placed in an oven to thermally cure the monomer for several hours. The resulting lens is then demolded from the mold.

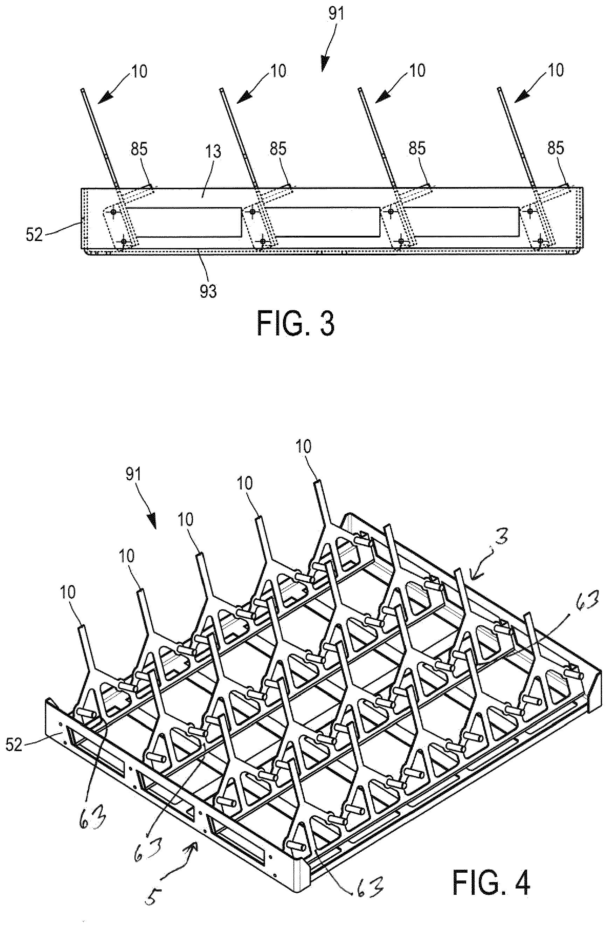

After the lenses go through the casting process, they are assembled and placed into a basket or tray for further processing in an oven for annealing. A robotic arm or gripper (not shown) such as those known in the art, that is configured to be programmably controlled by a user, is used to retrieve and place each lens to be annealed into a lens basket (Figures 3 and 4). For the invention described herein, there are various apparatuses or machines, and modules incorporating the machines, that are necessary to carry out the process herein. These machines preferably are positioned relative to one another to permit a continuous, uninterrupted movement of lenses throughout the manufacturing process. The lenses move from station to station, or from machine to machine, throughout the automated process by any convenient transport means including, without limitation, a lens basket as described herein, at least one conveyor belt, robotic means, and the like, and combinations thereof.

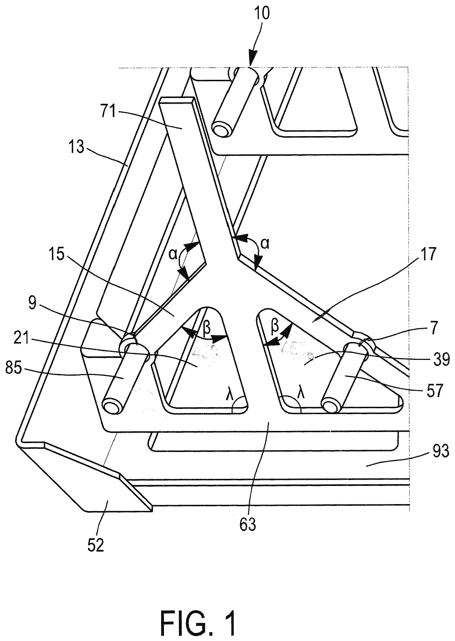

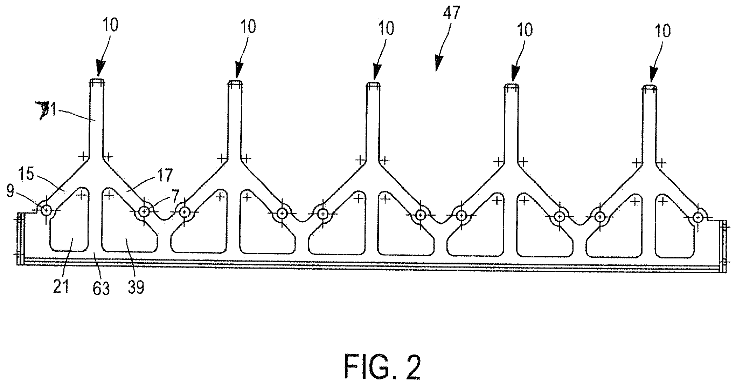

Preferably, a lens carrier, tray, or basket 52, as described herein, is used in conjunction with a plurality of transport means, as described above, to transport lenses without deforming or otherwise damaging them. The basket 52 can be configured to carry at least one lens, or more preferably, a plurality of lenses. Although Figure 1 illustrates a single lens holder 10 that can be used in the process described herein, a plurality of lens holders may also be used (Figures 2 through 4). The lenses may be manipulated at a station or a machine using conveyors, robotic means, indexing tables, grippers and the like, and combinations thereof, such as those known in the art. A robot with a mechanically pivoting arm having a gripper attached to it, including at least one finger, can be used. Preferably, the gripper is at least two-sided (not shown) and capable of grasping at least one lens at a time. In some embodiments, the gripper may be capable of gripping two or more lenses at a time. A separate transfer means may be connected to a pivot arm (not shown) by a mount. An opening means, such as an air cylinder, can be used to open and close the gripper by displacing fingers in a reference plane with respect to one another about the lens.

As illustrated in Figure 1, each lens holder 10 is configured for receiving a lens. Each lens is placed into a single lens holder 10 of the basket assembly 91 using a robotic means, such as the robotic arm described above. At least one side of each of the lens positioned in the lens holder is in a contacting relationship with the lens holder 10. In one aspect, the convex surface can be in a contacting relationship with at least a portion of the lens holder 10. In another aspect, the concave surface can be in a contacting relationship with at least a portion of the lens holder 10. The lens holder 10 can be made of stainless steel, but it is also contemplated that it may be made of other materials that are heat resistant, such as, but not limited to, other types of metals or heat resistant plastics. Stainless steel is preferred for cost purposes and is the most usual or desired material for lens holders. Other materials that could be used could be Polyether ether ketone ("PEEK"), which is heat resistant. Yet other materials may include, but not be limited to, rubber, glass, ceramic, an alloy, or the like, or any combination thereof.

The lens holder 10 comprises a central arm 71 which extends upward, away from at least one longitudinal brace 63 through a center of the lens holder 10 and a plurality of lens holders tilted relative to a reference plane that is perpendicular to a planar base 93, each lens holder comprising: a central arm 71, first and second angled arms 15, 17, disposed on opposite sides of the central arm 71, wherein: the first and second angled arms 15, 17 extend from the central arm 71 at a common angle and from a common point of intersection, and the first and second angled arms 15, 17 and the central arm 71 collectively define a tilted plane that is tilted at an angle relative to the reference plane, and first and second support members 57, 85 coupled to, respectively, the first and second angled arms, 17, 15, wherein: the first and second support members 57, 85 are disposed on a side of the tilted plane that faces away from the planar base 93, and the first and second support members 57, 85 extend away from the first and second angled arms 15, 17 along a direction perpendicular to the tilted plane.

The central arm 71 is continuously joined to each of: a first angled arm 15, and a second angled arm 17, and the longitudinal brace 63. In one embodiment, the longitudinal brace 63 may be removably coupled to at least a portion of the basket 52. The angle α formed between the central arm 71 and the first angled arm 15 is between about 130 degrees and about 140 degrees. More particularly, the angle α formed between the central arm 71 and each of the first angled arm 15 and the second angled arm 17 is about 137 degrees. However, other angles could be contemplated. Longitudinal brace 63 is continuously joined to the first angled arm 15 and the second angled arm 17. The longitudinal brace 63 is between about 70 mm and 80 mm, and more preferably, about 77 mm in diameter, although other dimensions may be contemplated. The angle λ between the longitudinal brace 63 and the central arm 71 is about 90 degrees. The inner angle β between the central arm 71 and the first angled arm 15 is between about 40 degrees and about 50 degrees. More particularly, the inner angle β between the central arm 71 and the first angled arm is about 45 degrees. Likewise, the inner angle between the central arm 71 and the second angled arm 17 is between about 40 degrees and 50 degrees. More particularly, the inner angle between the central arm 71 and the second angled arm 17 is about 45 degrees. However, other angles between the central arm 71 and the first angled arm 15 and the second angled arm 17 can be contemplated.

The configuration of the lens holder 10 is such that it comprises two substantially triangular sections positioned adjacent one another opposite each side of the central arm 71 of the lens holder 10. Each substantially triangular section is defined by a corner angle of substantially 90 degrees, which is defined by at least a portion of the longitudinal brace 63 and the central arm 71. The three sides of the first substantially triangular portion are defined by at least a portion of the central arm 71, at least a portion of the longitudinal brace 63, and at least a portion of the first angled arm 15 and an opening 21. The second substantially triangular portion is defined by at least a portion of the central arm 71, at least a portion of the longitudinal brace 63, and at least a portion of the second angled arm 17, respectively and a second opening 39 on the opposite side of the central arm 71 that is positioned in the center of the second triangular section. Thus, the central arm 71, first angled arm 15, second angled arm 17, and longitudinal brace 63 together define a continuously joined, uniform lens holder 10, punctuated by substantially triangular openings 21 and 39 on either side of the central arm 71, as illustrated in Figure 1, which substantially triangular openings mirror each other. The lens holder 10 is cut and formed from a single piece of stainless steel material. Hence, all sections are continuously joined to form one single lens holder unit 10.

First angled arm 15 and second angled arm 17 each comprise a receiving port 9 and port 7, respectively, that is disposed therethrough, for receiving a first support member 85 and a second support member 57, respectively. Each support member 85, 57, that is associated with an angled arm 15, 17, has a portion that is disposed through receiving ports 9, 7, respectively. When placed into a lens holder 10, each lens which is substantially round in shape, is positioned such that the lens is held between the central arm 71, first angled arm 15, second angled arm 17, and first support member 85 on one side of the peripheral surface of the lens with second support member 57 on the opposite peripheral surface side of the lens. The various support points of the lens holder 10 are configured to receive lenses of many different diameters and thicknesses. In one aspect, the lens holder is configured to receive a lens having a diameter that can range from about 65 mm to about 81 mm. However, the lens holder 10 can accommodate much larger diameters than this as well. In one aspect, the lens holder 10 can accommodate lenses that range in thickness from about 4 mm to about 22 mm in thickness.

The lens holder 10 is designed such that it is positioned at an angle of between about 10 degrees and 30 degrees relative to a reference plane, or between about 15 degrees and 25 degrees relative to a reference plane, or between about 20 degrees and 30 degrees relative to a reference plane, and more preferably about 20 degrees relative to a reference plane. The reference plane referred to herein is defined by the horizontal bottom surface or planar surface 93 of the lens tray 52. In one aspect the lens holder 10 is configured to be stationary once it is secured to the basket 52. In other embodiments the lens holder 10 can be configured to be moveable from a position that is about 20 degrees relative to the reference plane up to 90 degrees relative to the reference plane, or more. The angles within which the lens can be moved can vary, depending on the desired positioning of the lens. The lens holder illustrated herein has a slanted support at about 20 degrees, with at least three mechanical support points. The spatial arrangement of this support allows the free loading and unloading of the semi-finished lenses onto the lens holder with an automatic gripper. Each lens holder 10 is capable of holding at least one lens. Each basket assembly 91 is capable of holding a plurality of lenses. More preferably, each basket assembly 91 is capable of holding up to 20 lenses at a time. However, each basket assembly is capable of holding up to 50 lenses, if desired.

As illustrated in Figures 2 and 3, the lens holders can be removably attached to each other along the longitudinal brace 63. In yet another embodiment, the lens holders 10 can comprise one single unit 47 that is configured to be inserted into basket 52. The plurality of lens holders can comprise a row or unit 47 of lens holders running along a length of the longitudinal brace and spaced equally apart. Thus, the "lens holder" can mean at least one lens holder or a plurality of lens holders that are connected together into a single frame 47 (Figure 2) or are separately detachable from each other.

The planar base 93 extends between first side 5 and a second side 3 of the basket 52. The basket 52 comprises a longitudinal brace 63 coupled to the planar base 93 and extending between the first side 5 and the second side 3 of the basket 52. More particularly, the basket 52 comprises a plurality of longitudinal braces 63 that are spaced equally from each other; and wherein the plurality of lens holders 47 comprises a row of lens holders for each longitudinal brace 63, thereby defining a two-dimensional array of lens holders 47. The row of lens holders 47 is an integral part of the longitudinal brace 63. Each central arm 71 in the row 47 of lens holders extends from the longitudinal brace 63 to terminate in a free end. The row 47 of lens supports comprises an adjacent pair of angled arms 15, 17 that, when extending from their respective central arms, merges into each other at a point of union; and the longitudinal brace 63 comprises a tab extending into the point of union.

The planar base 93 comprises first and second side walls 5, 3 running along, respectively, the first and second sides 5, 3, and the longitudinal brace 63 is coupled to the first side wall 5 and the second side wall 3.

The invention described herein also involves a method of loading and unloading a basket configured to hold an optical article. In one aspect the optical article can be a lens body. More particularly, the optical article can be an ophthalmic lens. The method involves contacting an optical article against a central arm 71 of a lens holder 10, the lens holder 10 part of a plurality of lens holders of a lens basket 52. The lens basket comprises a planar base 63 and a plurality of lens holders 10, tilted relative to a reference plane that is perpendicular to the planar base 93, each lens holder 10 comprising: a central arm 71, first and second angled arms 15, 17, disposed on opposite sides of the central arm 71, wherein: the first and second angled arms 15, 17 extend from the central arm 71 at a common angle and from a common point of intersection, and the first and second angled arms 15, 17 and the central arm 71 collectively define a tilted plane that is tilted at an angle relative to the reference plane, and first and second support members coupled to, respectively, the first and second angled arms 15, 17, wherein: the first and second support members are disposed on a side of the tilted plane that faces away from the planar base 93, and the first and second support members extend away from the first and second angled arms along a direction perpendicular to the tilted plane; and then the method involves contacting the optical article against the first support member and the second support member of the lens holder, thereby loading the optical article into the basket 52. The method further comprises tilting the optical article to be parallel to the tilted plane, thereby orienting the optical article parallel to the tilted plane of the lens holder.

The method further involves displacing the optical article along a direction parallel to the tilted plane of the lens holder and away from the planar base, thereby unloading the optical article from the basket 52.

After each lens is placed in the basket 52 by a robotic arm, the basket 52 with the lenses is positioned in the oven (not shown) for annealing. Within the oven there may be several sections having different heating and/or cooling zones. The annealing process described herein can be used for semi-finished (SF) Rx lenses. Although not shown, the oven into which the basket 52 is positioned can be a tunnel oven which has a loading area at its inlet end and an offloading area at its outlet end. Between these inlet and outlet areas is a cavity into which the at least one lens blank is positioned such that the at least one lens blank is positioned in a non-contacting relationship with the internal surface of the cavity. The oven is configured to be completely sealed using a door (not shown) once the lens blanks are positioned inside of the cavity. In one embodiment, the oven may comprise further separate heating and/or cooling areas inside the cavity of the oven, wherein the temperature in each of the heating areas of the cavity may be appropriately adjusted throughout the process, as needed. The temperature may be adjusted manually or may be adjustable via a programmable feature. In another embodiment, a programmable oven might be used in place of the tunnel oven for carrying out the forming and annealing steps of the process. Preferably, the lenses are positioned such that they do not come into contact with any part of the oven interior surface or with each other. Each lens holder 10 is useful for preventing the lenses from contacting each other. In one embodiment the oven must be accurate to +/-1 ºC. Once the oven door is closed, it cannot be opened again until the procedure is complete. This is necessary to prevent over compensation of heat loss if the lenses are exposed to ambient air temperature.

In one embodiment the oven further comprises a conveyor (not shown) for passing the basket assembly 91 from the oven's inlet end to its outlet end. The linear speed of the conveyor may be 8 cm/min, but other speeds can be contemplated as well. During the annealing steps described herein, the conveyor is stationary. In one embodiment, the temperature in the cavity can be adjusted to a value that exceeds the vitreous or glass transition temperature of the synthetic material of which the lens is made. The temperature in the cavity can be independently adjusted and monitored and/or programmably controlled by a pre-programmed computer during the annealing process.

Lens blanks that are used herein may have a lens geometry that is defined by a concentric curve (i.e., 6.75 diopters = 86.800 mm concave and 86.800 mm convex), thus resulting in a substantially equal thickness throughout the entire lens. In addition to the annealing process, this geometric profile is beneficial for preventing uneven stress development throughout the lens during the manufacturing process. The concentric curvature of the lens and annealing of the lens allow for better downstream assembly of the completed ophthalmic lens product, including surfacing and bonding processes that occur after casting and annealing. The critical process steps and parameter combinations described herein also enable the bonding process to occur more smoothly, thereby enabling higher volume lens yields. The minimized residual stresses of the lenses produced herein may also have a better chemical resistance to any adhesives used during the bonding step of the process. In turn, this allows for a wider range of adhesive options to be used in future bonding processes for the lenses.

The annealing process involves providing at least one lens blank; providing a heating apparatus, wherein the heating apparatus comprises a cavity defined by an internal surface, wherein the cavity has a first temperature; positioning the at least one lens blank inside of the heating apparatus; substantially entirely sealing the heating apparatus; annealing the at least one lens blank in the heating apparatus for a predetermined time period and at a predetermined temperature(s).

The step of providing the at least one lens blank further comprises providing at least one lens blank, and the step of providing the at least one lens blank further comprises providing a lens blank, wherein the lens blank has a substantially equal thickness throughout substantially the entire lens blank.

For the method described herein, the optical article is selected from the group comprising: an ophthalmic device, an ophthalmic lens, a finished lens, a semi-finished (SF) lens, and an optical display.

In one aspect, following the annealing step, the process further includes at least one of: finishing the lens, applying a hard coat layer to at least a portion of the at least one lens blank, and edging the optical article. Thus, the method described herein comprises an optical article manufactured according to the process described above.

After annealing, the at least one lens blank is manually released from the oven. However, in another embodiment, the at least one lens could also be released via an automated, programmable mechanism. The released blanks constituted semi-finished lenses. The annealing method described herein could also be used to produce finished lenses. After the lenses are annealed, the robotic gripper referred to above is used to remove the lenses, one by one, from the basket assembly 91.

After casting, annealing, and release of the at least one lens blank, surfacing and bonding of the lens may be performed at a later stage. With the lens blank that is produced, once a prescription has been determined for a wearer, a prescriber then finishes the back of the lens by standard surfacing steps which include grinding and polishing the back surface to the desired curvature. No further machining is required on the front surface of the lens since the molding process produces for the surface a lens of optical quality. Once the lens is finished to desired power and optical quality, it can then be edged and placed into a frame selected by a user.

The invention disclosed herein is advantageous because it allows for use of automated tools, as described above. This allows for a reduction in manpower by allowing the automatic loading and unloading of the semi-finished lenses at disassembling and unloading prior to packing. Because of this invention, manpower is no longer needed for such manual operations as loading the lenses into trays, inserting the trays into an oven for annealing, and unloading the trays. This frees up manpower to be used elsewhere in the manufacturing process and eliminates the need for manual process steps, thereby creating a more efficient and cost effective process. In particular, this invention is very useful for high index semi-finished manufacturing during the annealing step. This invention allows for the improved optical performance of the semi-finished lenses which are manufactured. This invention also allows for better traceability of the semi-finished lenses all the way through the annealing process. The lens holder described herein allows for improved traceability through various identification ("ID") tools which allows the lenses to be tracked in single batches, thereby improving efficiency and quality, reducing cost, and streamlining the manufacturing process.

Although representative processes and devices have been described in detail herein, those skilled in the art will recognize that various substitutions and modifications may be made without departing from the scope of what is described and defined by the appended claims.

## Claims

1. A basket assembly for holding optical article, the basket assembly comprising:
a planar base; and
a plurality of lens holders tilted relative to a reference plane that is perpendicular to the planar base, each lens holder comprising:
a central arm,
first and second angled arms disposed on opposite sides of the central arm,
wherein:
the first and second angled arms extend from the central arm at a
common angle and from a common point of intersection, and **characterized in that**
the first and second angled arms and the central arm collectively define a
tilted plane that is tilted at an angle relative to the reference plane, and first and second support members coupled to, respectively, the first and second angled arms, wherein:
the first and second support members are disposed on a side of the tilted plane that faces away from the planar base, and
the first and second support members extend away from the first and
second angled arms along a direction perpendicular to the tilted plane.

2. The basket assembly of claim 1,
wherein the planar base extends between first and second sides;
wherein the basket assembly comprises a longitudinal brace coupled to the planar base and extending between the first and second sides; and
wherein the plurality of lens holders comprises a row of lens holders running along a length of the longitudinal brace and spaced equally apart.

3. The basket assembly of claim 2,
wherein the basket assembly comprises a plurality of longitudinal braces that are spaced equally from each other; and
wherein the plurality of lens holders comprises a row of lens holders for each longitudinal brace, thereby defining a two-dimensional array of lens holders.

4. The basket assembly of claim 2, wherein the row of lens holders is an integral part of the longitudinal brace.

5. The basket assembly of claim 3, wherein each central arm in the row of lens holders extends from the longitudinal brace to terminate in a free end.

6. The basket assembly of claim 3,
wherein the row of lens holders comprises an adjacent pair of angled arms that, when extending from their respective central arms, merges into each other at a point of union; and
wherein the longitudinal brace comprises a tab extending into the point of union.

7. The basket assembly of claim 2,
wherein the planar base comprises first and second side walls running along, respectively, the first and second sides; and
wherein the longitudinal brace is coupled to the first and second side walls.

8. The basket assembly of claim 1, wherein first and second angled arms each have a receiving port disposed therethrough and the support peg associated with the angled arm has a portion disposed through the receiving port.

9. The basket assembly of claim 1, wherein the angle ranges from 10° to 30°.

10. The basket assembly of claim 9, wherein the angle is 20°.

11. A method of loading and unloading a basket assembly configured to hold an optical article, the method comprising:
contacting an optical article against a central arm of a lens holder, the lens holder part of a plurality of lens holders of the basket assembly, the basket assembly comprising:
a planar base, and
the plurality of lens holders, tilted relative to a reference plane that is perpendicular to the planar base, each lens holder comprising:
a central arm,
first and second angled arms disposed on opposite sides of the central arm,
wherein:
the first and second angled arms extend from the central arm at a common angle and from a common point of intersection, and **characterized in that**
the first and second angled arms and the central arm collectively define a tilted plane that is tilted at an angle relative to the reference plane, and
first and second support members coupled to, respectively, the first and second angled arms, wherein:
the first and second support members are disposed on a side of the tilted plane that faces away from the planar base, and
the first and second support members extend away from the first and second angled arms along a direction perpendicular to the tilted plane; and
contacting the optical article against the first and second support members of the lens holder, thereby loading the optical article into the basket.

12. The method of claim 11, comprising:
tilting the optical article to be parallel to the tilted plane, thereby orienting the optical article parallel to the tilted plane of the lens holder.

13. The method of claim 11, comprising:
displacing the optical article along a direction parallel to the tilted plane of the lens holder and away from the planar base, thereby unloading the optical article from the basket assembly.

14. The method of claim 11,
wherein the planar base extends between first and second sides;
wherein the basket assembly comprises a longitudinal brace coupled to the planar base and extending between the first and second sides; and
wherein the plurality of lens holders comprises a row of lens holders running along a length of the longitudinal brace and spaced equally apart.

15. The method of claim 14,
wherein the basket assembly comprises a plurality of longitudinal braces that are spaced equally from each other; and
wherein the plurality of lens holders comprises a row of lens holders for each longitudinal brace, thereby defining a two-dimensional array of lens holders.

## Patentansprüche

1. Korbanordnung zum Halten eines optischen Gegenstands, wobei die Korbanordnung Folgendes umfasst:
eine plane Basis und
mehrere Glashalterungen, die in Bezug zu einer Bezugsebene, die senkrecht zur planen Basis verläuft, geneigt sind, wobei jede Glashalterung Folgendes umfasst:
einen Mittelarm,
einen ersten und zweiten angewinkelten Arm, die auf entgegengesetzten Seiten des Mittelarms angeordnet sind,
wobei:
sich der erste und zweite angewinkelte Arm vom Mittelarm in einem gemeinsamen Winkel und von einem gemeinsamen Schnittpunkt erstrecken, und **dadurch gekennzeichnet, dass** der erste und zweite angewinkelte Arm zusammen eine geneigte Ebene definieren, die in einem Winkel in Bezug zur Bezugsebene geneigt ist, und
ein erstes und zweites Stützelement, die mit dem ersten bzw. zweiten angewinkelten Arm gekoppelt sind, wobei:
das erste und zweite Stützelement auf einer Seite der geneigten Ebene angeordnet sind, die von der planen Basis abgewandt ist, und
sich das erste und zweite Stützelement entlang einer Richtung senkrecht zur geneigten Ebene vom ersten und zweiten angewinkelten Arm weg erstrecken.

2. Korbanordnung nach Anspruch 1,
wobei sich die plane Basis zwischen einer ersten und zweiten Seite erstreckt;
wobei die Korbanordnung eine Längsstrebe umfasst, die mit der planen Basis gekoppelt ist und sich zwischen der ersten und zweiten Seite erstreckt; und
wobei die mehreren Glashalterungen eine Reihe Glashalterungen umfassen, die entlang einer Länge der Längsstrebe verlaufen und gleichmäßig beabstandet sind.

3. Korbanordnung nach Anspruch 2,
wobei die Korbanordnung mehrere Längsstreben umfasst, die gleichmäßig voneinander beabstandet sind; und
wobei die mehreren Glashalterungen eine Reihe Glashalterungen für jede Längsstrebe umfassen, wodurch eine zweidimensionale Anordnung von Glashalterungen definiert wird.

4. Korbanordnung nach Anspruch 2, wobei die Reihe Glashalterungen ein integraler Teil der Längsstrebe ist.

5. Korbanordnung nach Anspruch 3, wobei sich jeder Mittelarm in der Reihe Glashalterungen von der Längsstrebe erstreckt und in einem freien Ende endet.

6. Korbanordnung nach Anspruch 3,
wobei die Reihe Glashalterungen ein angrenzendes Paar angewinkelte Arme umfasst, die, wenn sie sich von ihren jeweiligen Mittelarmen erstrecken, an einem Verbindungspunkt miteinander verschmelzen; und
wobei die Längsstrebe eine Zunge umfasst, die sich in den Verbindungspunkt erstreckt.

7. Korbanordnung nach Anspruch 2,
wobei die plane Basis eine erste und zweite Seitenwand umfasst, die entlang der ersten bzw. zweiten Seite verlaufen; und
wobei die Längsstrebe mit der ersten und zweiten Seitenwand gekoppelt ist.

8. Korbanordnung nach Anspruch 1, wobei der erste und zweite angewinkelte Arm jeweils eine dort hindurch angeordnete Aufnahmeöffnung aufweisen und der dem angewinkelten Arm zugeordnete Stützstift einen Abschnitt aufweist, der durch die Aufnahmeöffnung angeordnet ist.

9. Korbanordnung nach Anspruch 1, wobei der Winkel in einem Bereich von 10° bis 30° liegt.

10. Korbanordnung nach Anspruch 9, wobei der Winkel 20° beträgt.

11. Verfahren zum Be- und Entladen einer Korbanordnung, die dazu ausgelegt ist, einen optischen Gegenstand zu halten, wobei das Verfahren Folgendes umfasst:
Halten eines optischen Gegenstands an einen Mittelarm einer Glashalterung, wobei die Glashalterung Teil mehrerer Glashalterungen der Korbanordnung ist, wobei die Korbanordnung Folgendes umfasst:
eine plane Basis und
die mehreren Glashalterungen, die in Bezug zu einer Bezugsebene, die senkrecht zur planen Basis verläuft, geneigt sind, wobei jede Glashalterung Folgendes umfasst:
einen Mittelarm,
einen ersten und zweiten angewinkelten Arm, die auf entgegengesetzten Seiten des Mittelarms angeordnet sind,
wobei:
sich der erste und zweite angewinkelte Arm vom Mittelarm in einem gemeinsamen Winkel und von einem gemeinsamen Schnittpunkt erstrecken, und **dadurch gekennzeichnet, dass** der erste und zweite angewinkelte Arm zusammen eine geneigte Ebene definieren, die in einem Winkel in Bezug zur Bezugsebene geneigt ist, und
ein erstes und zweites Stützelement, die mit dem ersten bzw. zweiten angewinkelten Arm gekoppelt sind, wobei:
das erste und zweite Stützelement auf einer Seite der geneigten Ebene angeordnet sind, die von der planen Basis abgewandt ist, und
sich das erste und zweite Stützelement entlang einer Richtung senkrecht zur geneigten Ebene vom ersten und zweiten angewinkelten Arm weg erstrecken; und
Halten des optischen Gegenstands gegen das erste und zweite Stützelement der Glashalterung, wodurch der optische Gegenstand in den Korb geladen wird.

12. Verfahren nach Anspruch 11, Folgendes umfassend:
Neigen des optischen Gegenstands parallel zur geneigten Ebene, wodurch der optische Gegenstand parallel zur geneigten Ebene der Glashalterung orientiert wird.

13. Verfahren nach Anspruch 11, Folgendes umfassend:
Versetzen des optischen Gegenstands entlang einer Richtung parallel zur geneigten Ebene der Glashalterung und von der planen Basis weg, wodurch der optische Gegenstand aus der Korbanordnung entladen wird.

14. Verfahren nach Anspruch 11,
wobei sich die plane Basis zwischen einer ersten und zweiten Seite erstreckt;
wobei die Korbanordnung eine Längsstrebe umfasst, die mit der planen Basis gekoppelt ist und sich zwischen der ersten und zweiten Seite erstreckt; und
wobei die mehreren Glashalterungen eine Reihe Glashalterungen umfassen, die entlang einer Länge der Längsstrebe verlaufen und gleichmäßig beabstandet sind.

15. Verfahren nach Anspruch 14,
wobei die Korbanordnung mehrere Längsstreben umfasst, die gleichmäßig voneinander beabstandet sind; und
wobei die mehreren Glashalterungen eine Reihe Glashalterungen für jede Längsstrebe umfassen, wodurch eine zweidimensionale Anordnung von Glashalterungen definiert wird.

## Revendications

1. Ensemble formant panier destiné à supporter un article optique, l'ensemble formant panier comprenant :
une base plane ; et
une pluralité de porte-verres inclinés relativement à un plan de référence qui est perpendiculaire à la base plane, chaque porte-verre comprenant :
un bras central,
des premier et second bras obliques disposés sur des côtés opposés du bras central, dans lequel :
les premier et second bras obliques s'étendent à partir du bras central à un angle commun et depuis un point d'intersection commun, et **caractérisé en ce que** les premier et second bras obliques et le bras central définissent collectivement un plan incliné qui est incliné à un certain angle relativement au plan de référence, et
des premier et second éléments de support accouplés, respectivement, aux premier et second bras obliques, dans lequel :
les premier et second éléments de support sont disposés sur un côté du plan incliné orienté à l'opposé de la base plane, et
les premier et second éléments de support s'étendent à l'opposé des premier et second bras obliques le long d'une direction perpendiculaire au plan incliné.

2. Ensemble formant panier selon la revendication 1, dans lequel la base plane s'étend entre des premier et second côtés ;
dans lequel l'ensemble formant panier comprend un appui longitudinal accouplé à la base plane et s'étendant entre les premier et second côtés ; et
dans lequel la pluralité de porte-verres comprend une rangée de porte-verres s'étendant le long d'une longueur de l'appui longitudinal et mutuellement espacés de manière équidistante.

3. Ensemble formant panier selon la revendication 2,
dans lequel l'ensemble formant panier comprend une pluralité d'appuis longitudinaux qui sont mutuellement espacés de manière équidistante ; et
dans lequel la pluralité de porte-verres comprend une rangée de porte-verres pour chaque appui longitudinal, une grille bidimensionnelle de porte-verres étant ainsi définie.

4. Ensemble formant panier selon la revendication 2, dans lequel la rangée de porte-verres fait partie intégrante de l'appui longitudinal.

5. Ensemble formant panier selon la revendication 3, dans lequel chaque bras central de la rangée de porte-verres s'étend à partir de l'appui longitudinal et se termine par une extrémité libre.

6. Ensemble formant panier selon la revendication 3,
dans lequel la rangée de porte-verres comprend une paire adjacente de bras obliques qui, en s'étendant à partir de leurs bras centraux respectifs, se rejoignent au niveau d'un point d'union ; et
dans lequel l'appui longitudinal comprend une patte s'étendant dans le point d'union.

7. Ensemble formant panier selon la revendication 2,
dans lequel la base plane comprend des première et seconde parois latérales s'étendant le long, respectivement, des premier et second côtés ; et
dans lequel l'appui longitudinal est accouplé aux première et seconde parois latérales.

8. Ensemble formant panier selon la revendication 1, dans lequel les premier et second bras obliques comportent chacun un orifice de réception formé à travers eux et la tige de support associée au bras oblique comporte une partie disposée à travers l'orifice de réception.

9. Ensemble formant panier selon la revendication 1, dans lequel l'angle est compris entre 10° et 30°.

10. Ensemble formant panier selon la revendication 9, dans lequel l'angle est de 20°.

11. Procédé de chargement et de déchargement d'un ensemble formant panier conçu pour supporter un article optique, le procédé comprenant :
poser un article optique en contact contre un bras central d'un porte-verre, le porte-verre faisant partie d'une pluralité de porte-verres de l'ensemble formant panier, l'ensemble formant panier comprenant :
une base plane, et
la pluralité de porte-verres, inclinés relativement à un plan de référence qui est perpendiculaire à la base plane, chaque porte-verre comprenant :
un bras central,
des premier et second bras obliques disposés sur des côtés opposés du bras central, dans lequel :
les premier et second bras obliques s'étendent à partir du bras central à un angle commun et depuis un point d'intersection commun, et **caractérisé en ce que** les premier et second bras obliques et le bras central définissent collectivement un plan incliné qui est incliné à un certain angle relativement au plan de référence, et
des premier et second éléments de support accouplés, respectivement, aux premier et second bras obliques, dans lequel :
les premier et second éléments de support sont disposés sur un côté du plan incliné orienté à l'opposé de la base plane, et
les premier et second éléments de support s'étendent à l'opposé des premier et second bras obliques le long d'une direction perpendiculaire au plan incliné ; et
poser l'article optique en contact contre les premier et second éléments de support du porte-verre, l'article optique étant ainsi chargé dans le panier.

12. Procédé selon la revendication 11, comprenant :
incliner l'article optique de telle sorte qu'il soit parallèle au plan incliné, l'article optique étant ainsi orienté de telle sorte qu'il soit parallèle au plan incliné du porte-verre.

13. Procédé selon la revendication 11, comprenant :
déplacer l'article optique le long d'une direction parallèle au plan incliné du porte-verre et à l'opposé de la base plane, l'article optique étant ainsi déchargé de l'ensemble formant panier.

14. Procédé selon la revendication 11,
dans lequel la base plane s'étend entre des premier et second côtés ;
dans lequel l'ensemble formant panier comprend un appui longitudinal accouplé à la base plane et s'étendant entre les premier et second côtés ; et
dans lequel la pluralité de porte-verres comprend une rangée de porte-verres s'étendant le long d'une longueur de l'appui longitudinal et mutuellement espacés de manière équidistante.

15. Procédé selon la revendication 14,
dans lequel l'ensemble formant panier comprend une pluralité d'appuis longitudinaux qui sont mutuellement espacés de manière équidistante ; et
dans lequel la pluralité de porte-verres comprend une rangée de porte-verres pour chaque appui longitudinal, une grille bidimensionnelle de porte-verres étant ainsi définie.
